# EUROPÄISCHE PATENTSCHRIFT

(11) **EP 1 462 281 B1**
(45) Veröffentlichungstag und Bekanntmachung des Hinweises auf die Patenterteilung: **15.11.2006**
(21) Anmeldenummer: 04000689.2
(22) Anmeldetag: 15.01.2004
(51) Int. Cl.: B60H 1/00, B60H 1/32

(54) **Klimaanlage mit mehreren Verdampfern für ein Kraftfahrzeug**
Air conditiong device with multiple evaporators for a motor vehicle
Appareil de climatisation avec plusieurs évaporateurs pour véhicule à moteur

(30) Priorität: 15.02.2003 DE 10306395
(43) Veröffentlichungstag der Anmeldung: 29.09.2004
(73) Patentinhaber: Volkswagen Aktiengesellschaft, 38436 Wolfsburg (DE)
(72) Erfinder: Adiprasito, Baroto, Dr., 38547 Calberlah (DE)

(56) Entgegenhaltungen:
- EP-A- 0 842 798
- DE-U- 20 121 533
- US-B1- 6 318 116

## Beschreibung

Die Erfindung betrifft eine Klimaanlage mit mehreren Verdampfern für ein Kraftfahrzeug, insbesondere eine mit CO₂ als Kältemittel (Kältemittel R744) betriebene Klimaanlage in einem Kleinbus.

In Kraftfahrzeug-Klimaanlagen wird die Luft, die der Fahrgastzelle zugeführt wird, an einem Wärmetauscher (Verdampfer) gekühlt, wobei das in den Wärmetauscher geleitete Kältemittel in diesem verdampft und die dafür erforderliche Wärmemenge der Luft entzieht. In einem Kreisprozeß wird das Kältemittel durch Zustandsänderungen aufbereitet, so daß für das Kühlen der Luft eine begrenzte Kältemittelmenge ausreicht. In einem zweiten Wärmetauscher, dem Gaskühler oder Kondensator (Kältemittelverflüssiger), wird dem Kältemittel die im Verdampfer zugeführte Wärmemenge durch Außenluft wieder entzogen, wozu zwischen dem Kältemittel und der Außenluft eine Temperaturdifferenz herrschen muß. Daher wird das gasförmige Kältemittel in einem Kompressor verdichtet und in seiner Temperatur erhöht, bevor es in den Gaskühler geleitet und dort verflüssigt wird. Zwischen dem Verdampfer und dem Gaskühler ist des weiteren ein Expansionsorgan angeordnet, um das im Kompressor verdichtete und somit mit einem höheren Druck und mit einer höheren Temperatur versehene Kältemittel wieder zu entspannen und um den Kältemittelfluß zu regeln. Kompressor und Expansionsorgan trennen den Kältemittelkreislauf in einen Hochdruckund einen Niederdruckbereich. Üblicherweise befindet sich im Kältemittelkreislauf auch ein Flüssigkeitssammler, in dem das Kältemittel getrocknet wird, um Korrossionsschäden im Kältekreis zu vermeiden. Dieser Flüssigkeitssammler kann sowohl im Hochdruckbereich des Kältemittelkreislaufs als auch im Niederdruckbereich angeordnet sein.

Die Klimaanlage in einem Kleinbus ist in der Regel so gestaltet, daß zusätzlich zu dem im (Haupt-) Kältemittelkreislauf angeordneten Expansionsorgan und einem aus dem Verdampfer und einem Heizungswärmetauscher gebildeten Klimagerät ein zweites Klimagerät, zumindest jedoch ein zweiter Verdampfer, in einer Nebenleitung in Parallelschaltung zum ersten angeordnet ist, vorzugsweise für den hinteren Bereich des Kleinbusses, um den Innenraum gleichmäßiger und effektiver klimatisieren zu können.

Dabei dient der jeweilige Verdampfer dem Kühlen des Fahrgastraumes und der diesem zugeordnete Heizungswärmetauscher primär dem Heizen des Fahrgastraumes, wobei der Heizungswärmetauscher als elektrisch betriebener ausgeführt oder als vom warmen Motorkühlwasser durchflossener Heizungswärmetauscher ausgeführt sein kann. Der jeweilige Heizungswärmetauscher wird aber auch genutzt, um die am Verdampfer gekühlte Innenraumluft zu erwärmen und dadurch zu trocknen. Auch in der Nebenleitung können somit in Form eines Klimagerätes zwei Wärmetauscher eingesetzt werden, um den Fahrgastraum den Anforderungen entsprechend effektiv klimatisieren zu können. Wird in der Nebenleitung ausschließlich ein Verdampfer angeordnet, so kann mit diesem nur gekühlt werden, wodurch eine effektive Klimatisierung des Fahrgastraumes nicht erreicht werden kann.

Im Dokument EP-A-0 842 798 wird eine Klimaanlage gemäß des ersten Teils des Anspruchs 1 offenbart.

Es ist Aufgabe der Erfindung, eine Klimaanlage mit mehreren Verdampfern für ein Kraftfahrzeug nach dem Oberbegriff des Anspruchs 1 so zu gestalten, daß diese den Fahrgastraum mit reduziertem Aufwand klimatisieren kann.

Diese Aufgabe wird bei einer Klimaanlage nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, daß bei einer Klimaanlage mit mehreren Verdampfern, bei der in einem Hauptkreislauf mit einem Kompressor ein Kältemittel durch Zustandsänderungen aufbereitet und dabei in einem ersten Verdampfer Wärme von an diesem vorbeiströmender Luft für den Fahrgastraum eines Kraftfahrzeugs aufgenommen wird, und mit wenigstens einem parallel zum ersten Verdampfer an den Hauptkreislauf angeschlossenen weiteren Verdampfer mit einem diesem vorgeschalteten Expansionsorgan, der Eingang dieses Expansionsorgans mit dem Ausgang des Kompressors wahlweise verbindbar ist und der weitere Verdampfer als Wärmepumpe betrieben werden kann. In dieser Klimaanlage ist lediglich der erste Verdampfer in bekannter Weise mit einem Heizungswärmetauscher zum Wärmen der Luft zu einem Klimagerät kombiniert, mit dem gekühlt und geheizt werden kann. Da der weitere Verdampfer als umschaltbare Wärmepumpe sowohl zum Kühlen als auch zum Heizen eingesetzt werden kann, erübrigt sich für diesen eine Kombination mit einem Heizungswärmetauscher zu einem Klimagerät. Damit wird durch die Erfindung eine Bauteilereduzierung erreicht, und zugleich werden das Gewicht und die Kosten für eine Fahrzeugklimaanlage gesenkt. Überdies wird die Heizleistung, die zum Erwärmen der Luft am Heizungswärmetauscher zur Verfügung gestellt werden müßte, nicht benötigt.

Dabei kann der Hauptkreislauf mit dem Kompressor in bekannter Weise durch einen diesem nachgeschalteten Kältemittelkühler als Kältemittelverflüssiger, ein den Kältemittelfluß regelndes Expansionsorgan und einen ersten Verdampfer zum Kühlen des Fahrgastinnenraumes sowie einen dem Kompressor vorgeschalteten Kältemittelsammler gebildet sein, wobei die genannten Komponenten jeweils durch eine Kältemittelleitung miteinander verbunden sind. An den Hauptkreislauf ist in ebenfalls bekannter Weise, wie schon erwähnt, wenigstens eine Nebenleitung mit einem Expansionsorgan und einem Verdampfer angeschlossen. Nach der Erfindung ist nun zusätzlich der Eingang des in der Nebenleitung angeordneten Expansionsorgans mit dem Ausgang des im Hauptkreislauf angeordneten Kompressors über ein betätigbares Absperrorgan und eine zusätzliche Kältemittelleitung verbunden, wodurch der Eingang des Expansionsorgans wahlweise mit dem Ausgang des Kompressors oder mit dem Ausgang des Kältemittelkühlers verbunden werden kann.

Das Kältemittel durchströmt mit einem Teil-Massenstrom den Hauptkreislauf in der Reihenfolge der genannten Komponenten, wobei in dem mit dem ersten Verdampfer gebildeten Klimagerät Kälteleistung zum Kühlen der Luft für den Fahrgastraum zur Verfügung gestellt wird und diese durch den Heizungswärmetauscher bei Bedarf gewärmt werden kann. Mit einem übrigen Teil-Massenstrom durchströmt das Kältemittel entweder die Nebenleitung oder die zusätzliche Kältemittelleitung. Wird infolge der gewählten Stellung des Absperrorgans die Nebenleitung durchströmt, steht an dem in dieser angeordneten Verdampfer Kälteleistung zur Verfügung, mit der die Luft gekühlt wird. Wird aber das Absperrorgan so gestellt, daß der Kältemittel-Teil-Massenstrom vom Kompressor durch die zusätzliche Kältemittelleitung zum Expansionsorgan in der Nebenleitung fließt, wird der Verdampfer als Wärmepumpe genutzt, und es steht an diesem Verdampfer Wärmeleistung zum Wärmen der Luft zur Verfügung.

Hochdruckseitig kann in der Ausgangsleitung des Kältemittelverflüssigers im Hauptkreislauf ein innerer Wärmetauscher angeordnet sein, durch den das unter Hochdruck stehende gekühlte, flüssige Kältemittel zu dem (den) Expansionsorgan(en) und das entspannte, gasförmige Kältemittel zum Kompressor geleitet werden, so daß eine Abkühlung des zu entspannenden und zu verdampfenden Kältemittels eintritt. Der innere Wärmetauscher erhöht damit die Kälteleistung und den Wirkungsgrad des Kältemittelkreislaufs. Aber auch wegen der schnellen Änderung der Betriebsbedingungen der Klimaanlage ist ein innerer Wärmetauscher vorteilhaft.

Besonders eignet sich die Ausführung mit einem inneren Wärmetauscher für CO₂-Kältemittel.

Als Expansionsorgan wird vorteilhafterweise ein thermostatisches Expansionsventil eingesetzt. Im Anfahrzustand der Klimaanlage kann am Verdampferausgang im Hauptkreislauf eine Überhitzung des gasförmigen Kältemittels auftreten, so daß das Expansionsventil weit öffnet und der Kältemittelmassenstrom erhöht wird, wodurch in kürzester Zeit die maximale Kälteleistung zur Verfügung steht.

Die Erfindung wird nachstehend anhand eines Ausführungsbeispiels erläutert.

Die zugehörige Zeichnung zeigt schematisch den Kältemittelkreislauf einer mit dem Kältemittel CO₂ (R744) betriebenen Klimaanlage für einen Kleinbus. Der Kältemittelkreislauf weist in Kreislaufrichtung in einem Hauptkreislauf nacheinander einen Kompressor 1, einen Gaskühler (Kältemittelverflüssiger) 2, einen inneren Wärmetauscher 3 mit einer ersten Kältemittel-Leitungsschlange 3.1, ein thermostatisches Expansionsventil 4 bekannter Bauart mit einem nicht dargestellten thermostatischen Sensor, einen Verdampfer 5 in Kombination mit einem Heizungswärmetauscher 6, der an den Motorkühlflüssigkeitskreislauf angeschlossen ist, einen Flüssigkeitssammler 7 bekannter Bauart mit einem Ausgang für gasförmiges CO₂-Kältemittel und den Wärmetauscher 3 mit einer zweiten Kältemittel-Leitungsschlange 3.2 in der Saugleitung vor dem Kompressor 1 auf. In einer Nebenleitung 8 sind in Kreislaufrichtung in einer Parallelschaltung zum Expansionsventil 4 und dem Verdampfer 5 ein Ventil 9, ein zweites Expansionventil 10 und ein Verdampfer 11 angeschlossen. An das Ventil 9 ist eine Kältemittelleitung 12 gekoppelt, die mit dem Ausgang des Kompressors 1 verbunden ist.

Das CO₂-Kältemittel, das auf der Saugseite des Kompressors 1 einen Druck von etwa 35 bis 45 bar und eine Temperatur von ca. 20° C aufweist, wird im Kompressor 1 auf einen Druck von im wesentlichen 110 bar verdichtet, wobei die Temperatur des Kältemittels auf ca. 100°C steigt. Im Gaskühler 2 wird das Kältemittel durch vorbeiströmende Außenluft auf ca. 50° bis 60°C abgekühlt und dabei verflüssigt. Die dem CO₂-Kältemittel entnommene Wärme wird mit der Außenluft abgeführt. Im inneren Wärmetauscher 3 gibt das durch die Leitungsschlange 3.1 strömende CO₂-Kältemittel weitere Wärme an das durch die Leitungsschlange 3.2 in der Saugleitung des Kompressors 1 strömende Kältemittel ab, wobei es auf eine Temperatur von im wesentlichen 25°C abgekühlt wird. Im Hauptkreislauf wird das flüssige CO₂-Kältemittel, das auf der Hochdruckseite einen Druck von etwa 110 bar und eine Temperatur von im wesentlichen 25°C aufweist, im Expansionsventil 4 in den Naßdampfzustand überführt, wobei es auf einen Druck von 35 bis 45 bar entspannt und eine Temperatur von 0° bis 10°C abgekühlt wird. Mit diesem Zustand gelangt das CO₂-Kältemittel in den Verdampfer 5, in dem es durch Wärmeaufnahme von der zu kühlenden Außen- oder Umluft für den Fahrgastraum bei einem gleichbleibendem Druck von 35 bis 45 bar, der dem Saugdruck am Kompressor 1 entspricht, verdampft. Das Expansionsventil 4 als verstellbares Massenstromventil wird dabei so eingestellt, daß der zum Kühlen der Luft das Expansionsventil 4 passierende Kältemittel-Massenstrom so bemessen ist, daß das Kältemittel im Verdampfer 5 vollständig in den gasförmigen Zustand überführt wird, am Verdampferausgang überhitzt ist und eine Temperatur von im wesentlichen 12°C aufweist. Bei einer erhöhten geforderten Kälteleistung, also wenn das CO₂-Kältemittel mehr Wärme von der Außen- oder Umluft aufnehmen muß, steigt der Anteil der gasförmigen Phase im Verdampfer 7 und damit auch die Überhitzung, und es wird über den nicht dargestellten Sensor die Ventilöffnung im Expansionsventil 4 geweitet, so daß der Kältemittel-Massenstrom verstärkt und die Überhitzung reduziert werden. Das im Expansionsventil 4 auf einen Druck von 35 bis 45 bar entspannte und im Verdampfer 5 auf eine Temperatur von etwa 12°C. erwärmte gasförmige CO₂-Kältemittel wird vom Kompressor angesaugt und dabei durch die Leitungsschlange 3.2 im Wärmetauschers 3 geleitet, wobei es Wärme aufnimmt und wieder auf eine Temperatur von ca. 20°C vorgewärmt wird.

Soll der Fahrgastraum gekühlt werden, wird der Heizungswärmetauscher 6 im Hauptkreislauf nicht oder nur so weit zugeschaltet, daß die durch den Verdampfer 5 gekühlte Luft nur um wenige Grade erwärmt und dadurch getrocknet wird. Das Ventil 9 wird auf einen Kältemittel-Durchfluß durch die Nebenleitung gestellt, so daß der Kältemittel-Teil-Massenstrom mit den für den Hauptkreislauf genannten Temperaturund Druckzuständen diese durchströmt und am Ausgang des Verdampfers 11 eine Temperatur von etwa 12°C und einen Druck von 35 bis 45 bar aufweist und in diesem Zustand dem Kältemittel-Teil-Massenstrom des Hauptkreislaufs vor dem inneren Wärmetauscher 3 zugeführt wird. Am Verdampfer 11 wird Wärme ausgetauscht, dabei Luft für den Innenraum gekühlt und das Kältemittel im Verdampfer 11 erwärmt und in die Gasphase überführt.

Soll der Fahrgastraum erwärmt werden, wird der Heizungswärmetauscher 6 zugeschaltet, so, daß die durch den Verdampfer 5 gekühlte Luft erheblich erwärmt bzw. mit erwärmter Luft gemischt wird. Das Ventil 9 wird umgestellt, so daß die Nebenleitung 8 mit dem Expansionsventil 10 und dem Verdampfer 11 über die Kältemittelleitung 12 an den Ausgang des Kompressors 1 angeschlossen ist und von einem Kältemittel-Teil-Massenstrom durchströmt wird, der am Eingang des Expansionsventils 10 gasförmig ist und eine Temperatur von etwa 100°C und einen Druck von etwa 110 bar aufweist, was dem Zustand des Kältemittels am Ausgang des Kompressors 1 entspricht. Im Expansionsventil 10 erfolgen eine Entspannung des Kältemittels auf etwa 35 bis 45 bar und eine Abkühlung auf etwa 60°C und anschließend im Verdampfer 11 auf etwa 25°C durch Wärmeabgabe an die zu erwärmende Luft. In diesem Zustand wird das gasförmige Kältemittel dem Kältemittel-Teil-Massenstrom des Hauptkreislaufs vor dem Flüssigkeitssammler 7 zugeführt und gemeinsam mit diesem durch den Flüssigkeitssammler 7 und den Wärmetauscher 3 (Kältemittel-Leitungsschlange 3.2) in den Kompressor 1 gesaugt.

### BEZUGSZEICHENLISTE

- 1: Kompressor
- 2: Gaskühler
- 3: Wärmetauscher
- 3.1: Kältemittel-Leitungsschlange
- 3.2: Kältemittel-Leitungsschlange
- 4: Expansionsventil
- 5: Verdampfer
- 6: Heizungswärmetauscher
- 7: Flüssigkeitssammler
- 8: Nebenleitung
- 9: Ventil
- 10: Expansionsventil
- 11: Verdampfer
- 12: Kältemittelleitung

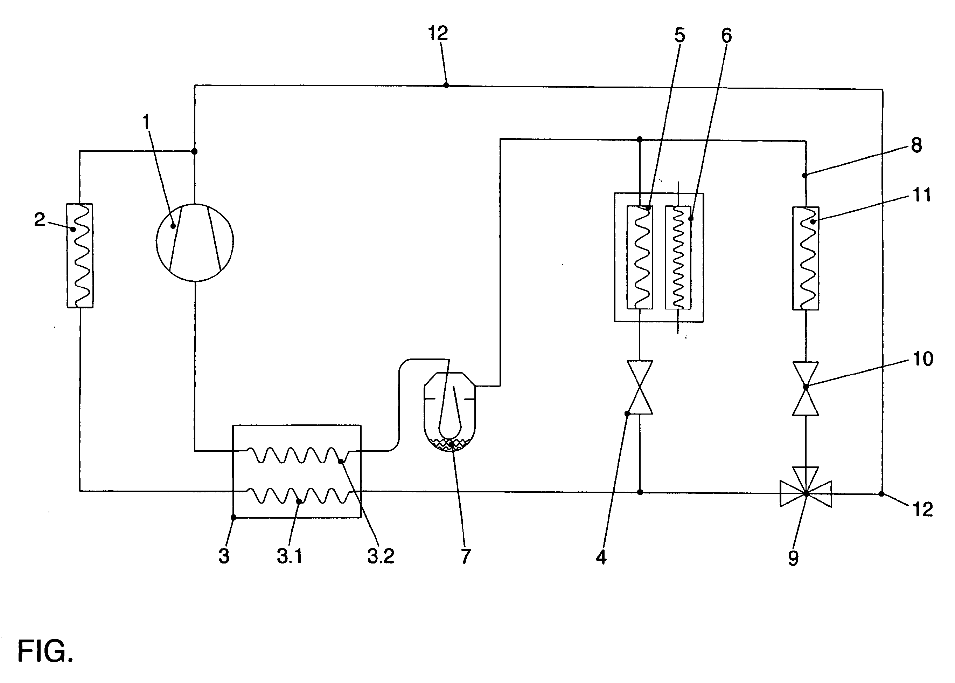

## Patentansprüche

1. Klimaanlage mit mehreren Verdampfern für ein Kraftfahrzeug, bei der in einem Hauptkreislauf mit einem Kompressor Kältemittel durch Zustandsänderungen aufbereitet und dabei in einem ersten Verdampfer Wärme von an diesem vorbeiströmender Luft für den Fahrgastraum aufgenommen wird, wobei der Verdampfer mit einem Heizungswärmetauscher zu einem Klimagerät kombiniert ist, und mit wenigstens einem weiteren Verdampfer mit einem diesem vorgeschalteten Expansionsorgan, der parallel zum ersten Verdampfer an den Hauptkreislauf angeschlossenen ist, **dadurch gekennzeichnet, daß** der Eingang des Expansionsorgans (10) mit dem Ausgang des Kompressors (1) verbindbar ist und der weitere Verdampfer (11) als Wärmepumpe betreibbar ist.

2. Klimaanlage nach Anspruch 1, **dadurch gekennzeichnet, daß** der Hauptkreislauf durch einen dem Kompressor (1) nachgeschalteten Kältemittelkühler (2) als Kältemittelverflüssiger, ein den Kältemittelfluß regelndes Expansionsorgan (4), den ersten Verdampfer (5) und einen dem Kompressor (1) vorgeschalteten Flüssigkeitssammler (7), die jeweils durch eine Kältemittelleitung miteinander verbunden sind, gebildet ist, daß der Eingang des dem weiteren Verdampfer (11) zugeordneten Expansionsorgans (10) zusätzlich über ein betätigbares Absperrorgan (9) und eine Kältemittelleitung (12) mit dem Ausgang des Kompressors (1) verbunden ist, und daß der Eingang wahlweise mit dem Ausgang des Kompressors (1) oder mit dem Ausgang des Kältemittelkühlers (2) verbindbar ist.

3. Klimaanlage nach Anspruch 1 oder 2, **dadurch gekennzeichnet, daß** in der Ausgangsleitung des Kältemittelkühlers (2) ein innerer Wärmetauscher (3) mit der Saugleitung des Kompressors (1) gebildet ist.

4. Klimaanlage nach Anspruch 3, **dadurch gekennzeichnet, daß** als Kältemittel R744 (CO₂-Kältemittel) verwendet wird.

5. Klimaanlage nach Anspruch 1 oder 2, **dadurch gekennzeichnet, daß** die Expansionsorgane (4, 10) thermostatische Expansionsventile sind.

6. Kältemittelkreislauf für eine Klimaanlage mit mehreren Verdampfern nach einem oder mehreren der Ansprüche 1 bis 5, **dadurch gekennzeichnet, daß** im Hauptkreislauf gasförmiges Kältemittel in einem Kompressor (1) verdichtet und erwärmt wird, durch einen Wärmetauscher (2) gefördert, in diesem abgekühlt und verflüssigt wird, danach ein Teil des verflüssigten Kältemittel-Massenstroms in einem ersten Expansionsorgan (4) entspannt und in einem ersten Verdampfer (5) wieder in den gasförmigen Zustand versetzt und vom Kompressor (1) angesaugt wird, und daß in einer Nebenleitung mit einem weiteren Verdampfer (11), dem ebenfalls ein Expansionsorgan (10) vorgeschaltet ist, entweder der andere Teil des verflüssigten Kältemittel-Massenstroms parallel zum Hauptkreislauf in den gasförmigen Zustand versetzt und vom Kompressor (1) wieder angesaugt wird oder ein Teil des vom Kompressor (1) verdichteten und erwärmten gasförmigen Kältemittel-Massenstroms über das Expansionsorgan (10) dem diesem nachgeschalteten Verdampfer (11) zugeführt und vom Kompressor (1) wieder angesaugt wird.

7. Kältemittelkreislauf nach Anspruch 6, **dadurch gekennzeichnet, daß** zwischen dem vom Kompressor (1) angesaugten gasförmigen Kältemittel und dem durch das im Kältemittelverflüssiger (2) gekühlten, flüssigen Kältemittel ein Wärmeaustausch stattfindet.

## Claims

1. Air-conditioning system having a plurality of evaporators for a motor vehicle, in which coolant is conditioned in a main circuit with a compressor by means of changes in state and in the process heat is absorbed in a first evaporator from air which flows past it for the passenger compartment, the evaporator being combined with a heating heat exchanger to form an air-conditioning unit, and having at least one further evaporator with an expansion element which is connected upstream of it and which is connected to the main circuit in parallel with the first evaporator, **characterized in that** the inlet of the expansion element (10) can be connected to the outlet of the compressor (1), and the further evaporator (11) can be operated as a heat pump.

2. Air-conditioning system according to Claim 1, **characterized in that** the main circuit is formed by a coolant cooler (2), connected downstream of the compressor (1), as a coolant liquefier, an expansion element (4) which controls the flow of coolant, the first evaporator (5) and a fluid collector (7) which is connected upstream of the compressor (1), these each being connected to one another by a coolant line, **in that** the inlet of the expansion element (10) which is assigned to the further evaporator (11) is additionally connected to the outlet of the compressor (1) via a shut-off element (9) which can be activated, and via a coolant line (12), and **in that** the inlet can optionally be connected to the outlet of the compressor (1) or to the outlet of the coolant cooler (2).

3. Air-conditioning system according to Claim 1 or 2, **characterized in that** an inner heat exchanger (3) with the suction line of the compressor (1) is formed in the outlet line of the coolant cooler (2).

4. Air-conditioning system according to Claim 3, **characterized in that** R744 (CO₂ coolant) is used as the coolant.

5. Air-conditioning system according to Claim 1 or 2, **characterized in that** the expansion elements (4, 10) are thermostatic expansion valves.

6. Coolant circuit for an air-conditioning system having a plurality of evaporators according to one or more of Claims 1 to 5, **characterized in that** in the main circuit gaseous coolant is compressed and heated in a compressor (1), is fed through a heat exchanger (2), cooled and liquefied in it and then part of the liquefied coolant mass flow is expanded in a first expansion element (4) and returned to the gaseous state in a first evaporator (5) and sucked in by the compressor (1), and **in that** in a secondary line with a further evaporator (11), upstream of which an expansion element (10) is also connected, either the other part of the liquefied coolant mass flow is returned to the gaseous state in parallel with the main circuit and sucked in again by the compressor (1), or part of the gaseous coolant mass flow which is compressed and heated by the compressor (1) is fed via the expansion element (10) to the evaporator (11) which is connected downstream of it and is sucked in again by the compressor (1).

7. Coolant circuit according to Claim 6, **characterized in that** an exchange of heat takes place between the gaseous coolant which is sucked in by the compressor (1) and the liquid coolant which is cooled in the coolant liquefier (2).

## Revendications

1. Appareil de climatisation à plusieurs évaporateurs pour un véhicule automobile, dans le circuit principal duquel un fluide frigorifique a son état modifié par un compresseur, la chaleur de l'air d'habitacle qui balaye un premier évaporateur étant prélevée, l'évaporateur étant combiné avec un échangeur de chaleur de chauffage pour former un climatiseur, au moins un autre évaporateur en amont duquel est raccordé un organe de détente étant raccordé au circuit principal en parallèle au premier évaporateur, **caractérisé en ce que** l'entrée de l'organe de détente (10) peut être reliée à la sortie du compresseur (1) et **en ce que** l'autre évaporateur (11) peut être utilisé comme pompe à chaleur.

2. Appareil de climatisation selon la revendication 1, **caractérisé en ce que** le circuit principal est formé par un refroidisseur (2) de fluide frigorifique raccordé en aval du compresseur (1) et servant de dispositif de liquéfaction du fluide frigorifique, un organe de détente (4) qui régule le début de fluide frigorifique, le premier évaporateur (5) et un collecteur de liquide (7) raccordé en amont du compresseur (1), tous ces éléments étant reliés les uns aux autres par un conduit de fluide frigorifique, **en ce que** l'entrée de l'organe de détente (10) associé à l'autre évaporateur (11) est de plus reliée à la sortie du compresseur (1) par un organe de fermeture (9) qui peut être activé et par un conduit (12) de fluide frigorifique et **en ce que** cette entrée peut être reliée sélectivement à la sortie du compresseur (1) ou à la sortie du refroidisseur (2) de fluide frigorifique.

3. Appareil de climatisation selon la revendication 1 ou 2, **caractérisé en ce que** dans le conduit de sortie du refroidisseur (2) de fluide frigorifique, un échangeur de chaleur interne (3) est formé par le conduit d'aspiration de compresseur (1).

4. Appareil de climatisation selon la revendication 3, **caractérisé en ce qu'**il utilise du R744 (fluide frigorifique à CO₂) comme fluide frigorifique.

5. Appareil de climatisation selon la revendication 1 ou 2, **caractérisé en ce que** les organes de détente (4, 10) sont des soupapes de détente thermostatique.

6. Circuit de fluide frigorifique pour un appareil de climatisation qui présente plusieurs évaporateurs, selon l'une ou plusieurs des revendications 1, à 5, **caractérisé en ce que** dans le circuit principal, le fluide frigorifique gazeux est comprimé dans un compresseur (1) et est chauffé, est transporté à travers un échangeur de chaleur (2) pour y être refroidi et liquéfié, une partie de l'écoulement massique de fluide frigorifique liquéfié étant ensuite détendue dans un premier organe de détente (4) et ramenée à l'état gazeux dans un premier évaporateur (5) pour être ensuite aspirée par le compresseur (1) et **en ce que** dans un conduit secondaire qui présente un autre évaporateur (11) en amont duquel est également raccordé un organe de détente (10), l'autre partie de l'écoulement massique de fluide frigorifique liquéfié en parallèle au circuit principal est ramenée à l'état gazeux et est réaspirée par le compresseur (1) ou une partie de l'écoulement massique de fluide frigorifique gazeux, comprimée par le compresseur (1) et chauffée, est apportée par l'intermédiaire de l'organe de détente (10) à l'évaporateur (11) raccordé en aval de cet organe de détente pour être réaspirée par le compresseur (1).

7. Circuit de fluide frigorifique selon la revendication 6, **caractérisé en ce qu'**un échange de chaleur a lieu entre le fluide frigorifique gazeux aspiré par le compresseur (1) et le fluide frigorifique liquide refroidi dans le dispositif (2) de liquéfaction du fluide frigorifique.
